# EUROPEAN PATENT APPLICATION

(11) **EP 0 853 043 A1**
(43) Date of publication of application: **15.07.1998**
(21) Application number: 98100390.8
(22) Date of filing: 12.01.1998
(51) Int. Cl.: B65B 19/10

(54) **Method of forming layers of cigarettes**

(30) Priority: 13.01.1997 IT BO970012
(71) Applicant: G.D SOCIETA' PER AZIONI, I-40133 Bologna (IT)
(72) Inventor: Boldrini, Fulvio, 44100 Ferrara (IT); Draghetti, Fiorenzo, 40059 Medicina (IT)
(74) Representative: Jorio, Paolo

(57) **Abstract**

A method of forming layers (2) of cigarettes (3), each layer (2) containing a given number (N) of cigarettes (3) arranged side by side, and whereby at least two adjacent cigarettes (3a, 3b) in the same layer (2) are gravity fed to a respective inflow seat (28) located at an open end (8) of a hopper (6) containing cigarettes (3); the two cigarettes (3a, 3b) are extracted from the respective inflow seat (28) by a single extracting element (37) housed inside the inflow seat (28), and are fed by the extracting element (37) to a conveyor (10) traveling continuously along a path (P2) extending past the open end (8) of the hopper, to form a portion of the layer (2).

## Description

The present invention relates to a method of forming layers of cigarettes.

Layers of cigarettes are known to be formed using a unit comprising a cigarette hopper in which the cigarettes are fed by gravity to an open end of the hopper; and a shutter device at the open end of the hopper, for regulating supply of the cigarettes to a cigarette layer conveyor traveling along a substantially curved path. The hopper comprises a number of supply channels for gravity feeding respective columns of cigarettes to respective output openings arranged along an arc parallel to the path of the conveyor at the open end of the hopper; and the shutter device comprises, for each output opening, a regulating element for regulating supply of the cigarettes from the respective channel synchronously with the other elements.

Forming units of the above type involve several drawbacks, due to the size of the regulating elements, which, though fairly compact nowadays, still result in the output openings being distributed along a fairly extensive arc, so that the hopper and the shutter device are fairly complex, bulky and expensive to produce, and the supply channels, in addition to being arranged some distance apart, are in most cases also inclined differently.

It is an object of the present invention to provide a method of forming layers of cigarettes, which enables the formation of compact cigarette hoppers in a straightforward, low-cost manner.

According to the present invention, there is provided a method of forming layers of cigarettes, each layer comprising a given number of cigarettes arranged side by side; characterized by comprising the steps of gravity feeding at least two adjacent cigarettes of a said layer to a respective inflow seat located at an open end of a hopper containing cigarettes; extracting said two cigarettes from the respective inflow seat by means of a single extracting means housed inside the inflow seat; continuously feeding a conveyor along a given path extending past said open end; and feeding said two cigarettes to the conveyor by means of said extracting means to form a portion of said layer.

A non-limiting embodiment of the present invention will be described by way of example with reference to the accompanying drawings, in which:
Figure 1 shows a front view, with parts in section and parts removed for clarity, of a preferred embodiment of a unit for forming layers of cigarettes and implementing the method according to the present invention;
Figure 2 shows a larger-scale view, with parts in section and parts removed for clarity, of a detail in Figure 1;
Figures 3 and 4 show, schematically, a sequence of steps in the formation of a layer of cigarettes.

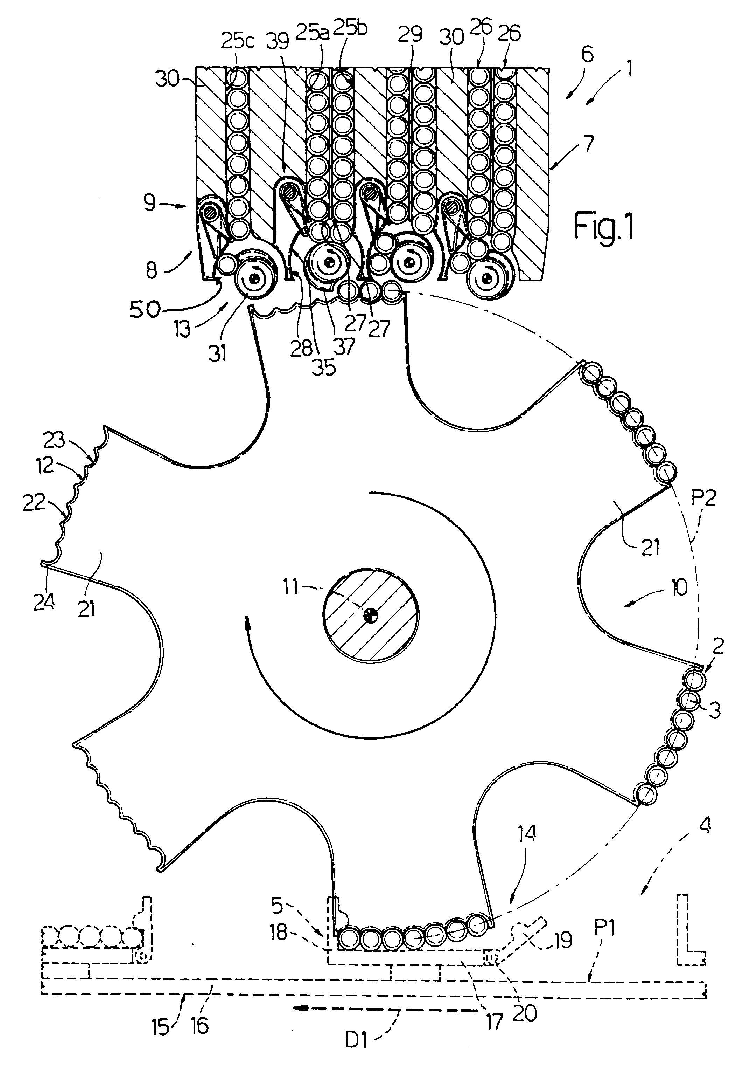

Number 1 in Figure 1 indicates a unit for forming layers 2 of cigarettes 3, wherein each layer 2 comprises a given N number of cigarettes 3 arranged side by side.

Unit 1 comprises a pocket conveyor 4 traveling continuously in a given direction D along a given path P1, and in turn comprising a succession of pockets 5, each for housing at least a respective layer 2; and a hopper 6 for cigarettes 3, located substantially over conveyor 4 and in turn comprising an outlet 7 for feeding cigarettes 3, crosswise to the axes of cigarettes 3, to a respective open end 8, and a regulating device 9 located at end 8 to regulate supply of cigarettes 3 from outlet 7.

Unit 1 also comprises a drum conveyor 10 interposed between pocket conveyor 4 and outlet 7, rotating continuously (clockwise in Figure 1) about a horizontal axis 11 crosswise to direction D, and in turn comprising a number of peripheral seats 12, each of which travels along an annular path P2 coaxial with axis 11, receives a respective layer 2 at a loading station 13 located along path P2 and defined by end 8 of outlet 7, and feeds layer 2 crosswise to the axes of cigarettes 3 into a pocket 5 at a supply station 14 downstream from station 13 along path P2 in the rotation direction of conveyor 10.

In the example embodiment shown, unit 1 comprises one outlet 7 for cigarettes 3, but may normally comprise two or three outlets 7 arranged in series along path P1, and, for each outlet 7, a respective drum conveyor 10, so as to supply each pocket 5 traveling along path P1 with a number of layers 2 of cigarettes 3 equal to the number of outlets 7, and so form a group (not shown) of cigarettes 3 defining the content of a packet (not shown) of cigarettes 3.

Pocket conveyor 4 comprises an endless belt 15 having an upper conveying branch 16 extending along path P1; and each pocket 5 of conveyor 4 is substantially U-shaped, and comprises a bottom wall 17 parallel to direction D and connected to belt 15, a front lateral wall 18 extending crosswise to direction D from wall 17, and a rear lateral wall 19 hinged along the bottom edge 20 to wall 17 so as to rotate between a lowered loading position in which wall 19 is substantially coplanar with wall 17 to permit insertion of a layer 2 inside pocket 5, and a raised retaining position in which wall 19 is parallel to wall 18 and crosswise to wall 17 to retain layer 2 inside pocket 5.

Conveyor 4 also comprises a known actuating device (not shown), which cooperates with belt 15 to set rear wall 19 of each pocket 5 to the lowered position upstream from station 14 along path P1 in direction D, and to the raised position downstream from station 14.

Peripheral seats 12 of drum conveyor 10 are of a width, measured parallel to axis 11, substantially equal to the length of cigarettes 3, are each supported on a respective radial arm 21 extending from axis 11, and comprise N number of cylindrical grooves 22 parallel to axis 11; each of which grooves receives a respective cigarette 3 at station 13 to gradually form a layer 2 in seat 12, and retains cigarette 3, in known manner by suction, on the bottom surface 23 of seat 12 as far as station 14. The last groove 22 of each seat 12 in the rotation direction of conveyor 10 comprises a respective longitudinal wall 24 extending radially outwards from surface 23 by a length approximately equal to but no greater than the thickness of cigarette 3, and in turn comprising a central recess (not shown) which is engaged by regulating device 9 as explained in detail later on.

Outlet 7 comprises a number of parallel, vertical supply channels 25 for gravity feeding respective columns 26 of cigarettes 3 to respective bottom openings 27 substantially arranged along an arc parallel to path P1 at the open end 8 of outlet 7. More specifically, channels 25 are equal in number to the N number of cigarettes 3 in each layer 2; N-1 channels 25 are arranged side by side in pairs; and each pair of channels 25 has respective bottom openings 27 also arranged side by side and facing a respective substantially cylindrical common inflow seat 28 for receiving cigarettes 3 and formed parallel to axis 11 inside open end 8.

Since, in the example shown, said N number is an odd number equal to seven, six of the seven channels 25 are arranged side by side in pairs (indicated 25a-25b), and the channels in each pair are separated by a respective vertical partition 29 and feed respective columns 26 of cigarettes 3 to the respective common seat 28; and one channel 25 (indicated 25c) has bottom opening 27 facing a respective seat 28. Unless otherwise stated, anything said hereinafter in connection with pairs of channels 25a-25b also applies to the single channel 25c. Moreover, channel 25c and pairs of channels 25a-25b are separated by respective partitions 30 thicker than partitions 29, and the partitions 30 on opposite sides of outlet 7 define the lateral walls of the outlet.

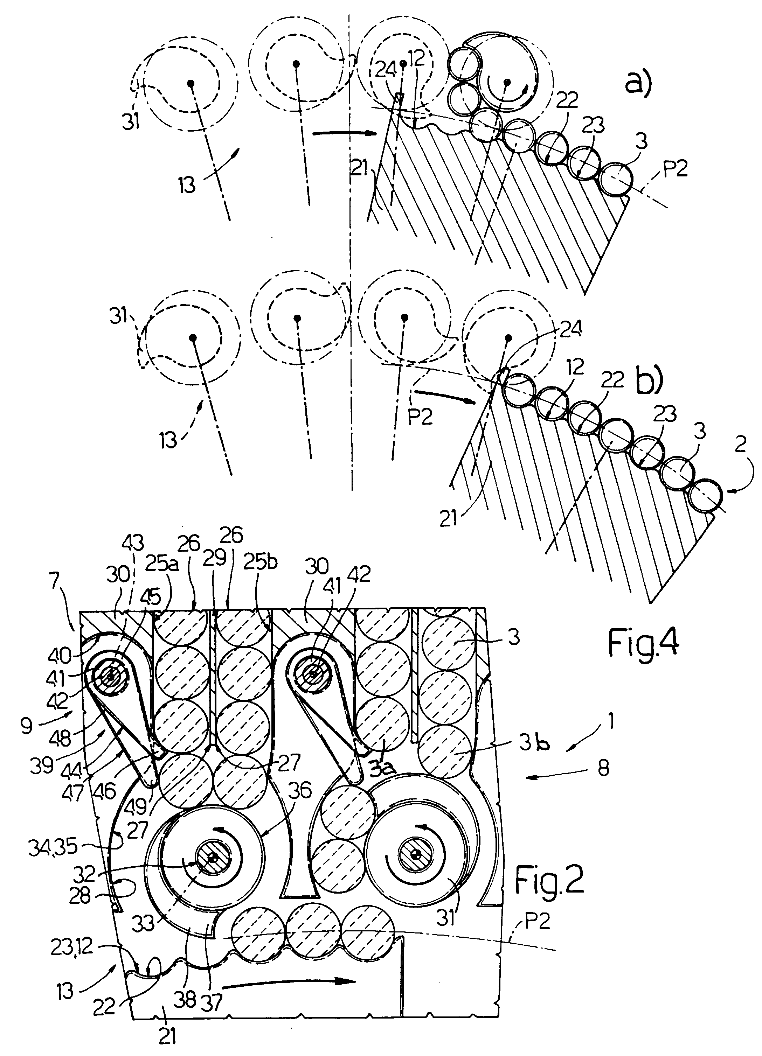

As shown more clearly in Figure 2, regulating device 9 comprises, for each seat 28, a respective extracting element 31, which is mounted for rotation inside seat 28, is rotated by a respective control device 32 about a respective axis 33 parallel to axis 11, and defines, with an inner surface 34 of seat 28, a curved withdrawal channel 35 extending along the bottom openings 27 of the respective pair of channels 25a-25b.

More specifically, each element 31 is so located as to interfere with both channels 25a, 25b terminating at respective seat 28, and comprises a substantially cylindrical lateral surface 36, and an extracting tooth 37, which extends radially with respect to axis 33 from surface 36, and in turn comprises a respective top surface 38 blending with surface 36 in such a manner that element 31 is substantially comma-shaped, and the cross section of withdrawal channel 35 varies, in use, according to the position of tooth 37 along channel 35.

For at least one of the channels in each pair of side by side channels 25a, 25b, regulating device 9 comprises a retaining device 39 controlled by respective device 32, and which provides for preventing the passage of cigarettes 3 through opening 27 of the relative channel 25a, 25b, and for preventing cigarettes 3 from being fed along withdrawal channel 35 until they are engaged, in use, by tooth 37.

More specifically, each retaining device 39 is housed inside a respective seat 40 formed, in the example embodiment shown, to the side of channel 25a and in respective partition 30, and comprises two shafts 41 and 42 fitted one inside the other, coaxially with a common axis 43 parallel to axis 11, and connected independently by a known transmission to device 32.

Each device 39 also comprises at least a first retaining lever 44 fitted at one end 45 to shaft 41 so as to oscillate, with respect to axis 43 and in time with rotation of extracting element 31, between a retaining position in which a substantially hook-shaped free end 46 of lever 44 is located at respective opening 27 to prevent the passage of cigarettes 3 in respective column 26 through opening 27, and a withdrawn position in which end 46 is housed entirely inside seat 40.

Each device 39 also comprises at least a second retaining lever 47 fitted at one end 48 to shaft 42 so as to oscillate, with respect to axis 43 and shaft 44 and in time with rotation of extracting element 31, between a retaining position in which the free end 49 of lever 47 is located inside channel 35, downstream from the two openings 27, to prevent cigarettes 3 from being fed along channel 35, and a withdrawn position in which end 49 is housed entirely inside seat 40.

In the example embodiment shown, levers 44 and 47 comprise respective twin levers (not shown) fitted to the opposite ends of respective shafts 41 and 42, so that each cigarette 3 is engaged at at least two opposite end points.

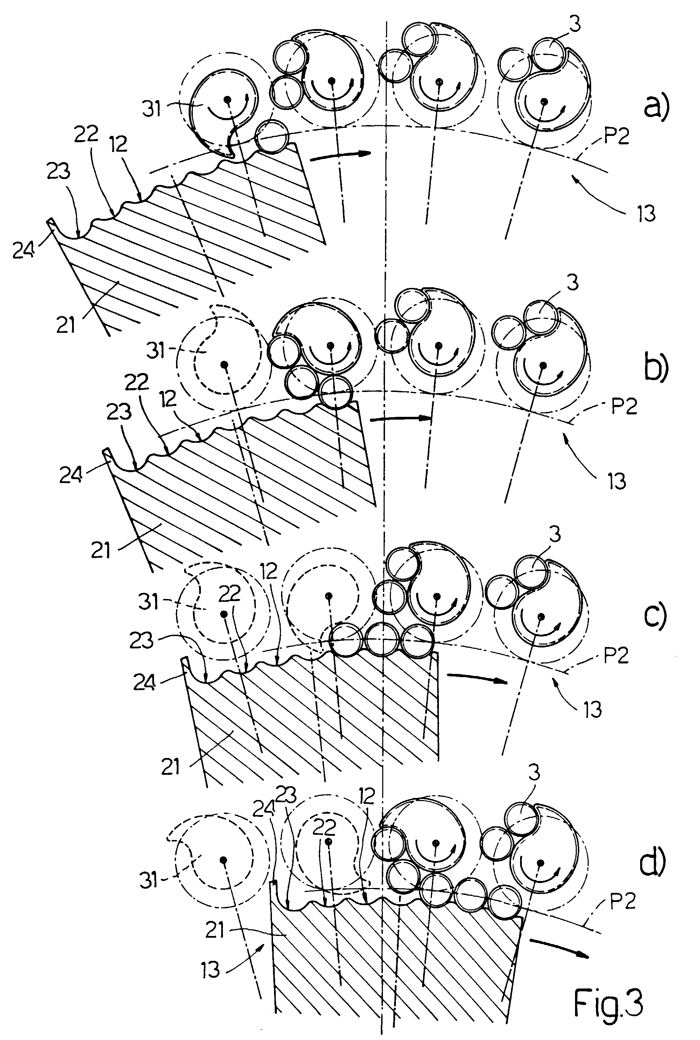

Operation of unit 1 will now be described with reference also to Figures 3 and 4, with reference initially to one pair of channels 25a, 25b, and as of the instant in which channels 25a and 25b are filled with respective columns 26 of cigarettes 3; levers 44 and 47 are set to the respective retaining positions; a cigarette 3 in channel 25a (indicated 3a) is retained by levers 44 over respective opening 27; a cigarette 3 in channel 25b (indicated 3b) is positioned through respective opening 27 and rests on top surface 38 of tooth 37; and tooth 37 is located along channel 35, downstream from both openings 27 in the rotation direction of element 31.

As of the above instant, levers 44 are withdrawn, and cigarette 3a, formerly retained over opening 27, drops onto top surface 38 of tooth 37 and, as element 31 rotates, is substantially pushed by friction with top surface 38 against ends 49 of levers 47. At the same time, element 31 rotates about axis 33 to feed tooth 37 along channel 35 and gradually increase the cross section of channel 35 at openings 27 until, as top surface 38 comes to an end, surface 36 of element 31 is positioned facing both openings 27, and cigarette 3b followed by cigarette 3a drop down completely inside channel 35.

At this point, levers 44 are restored to the retaining position to prevent the cigarette 3a of the next layer 2 from contacting cigarettes 3a and 3b; levers 47 are withdrawn; at substantially the same instant, tooth 37 contacts cigarette 3b to extract cigarettes 3a and 3b entirely from channels 25 and feed cigarettes 3a and 3b simultaneously along channel 35 to a bottom opening 50 of seat 28 past which a seat 12 is being fed by conveyor 10; and tooth 37 pushes cigarettes 3a and 3b through opening 50 and one after the other into respective grooves 22 to form a portion of respective layer 2.

Extraction is simpler in the case of channel 25c, which supplies conveyor 10 with one cigarette 3 substantially in the same way as described above. In the case of the other pairs of channels 25a-25b, extraction is performed in the same way, but is so timed as to gradually form a layer 2 inside seat 12 as this travels through station 13 along path P2. Conveyor 10 and elements 31 are so rotated simultaneously that, once cigarettes 3 are deposited inside seat 12, teeth 37 of elements 31 engage the recess formed in wall 24.

Once layer 2 is formed in respective seat 12, conveyor 10, rotating about axis 11, feeds layer 2 to station 14 through which a pocket 5 is being fed by conveyor 4 in time with seat 12 at a traveling speed Vl equal to the surface speed V2 of seat 12 and with rear wall 19 in the lowered loading position to permit the passage of arm 21 and receive layer 2 from respective seat 12.

According to a variation not shown, levers 44 and 47 of each retaining device 39 may be replaced by respective nozzles for supplying a jet of air to arrest the fall and forward feed of cigarettes 3a; and elements 31 may comprise a number of surface suction holes formed in front of respective teeth 37 to retain cigarettes 3a and 3b in given positions on surface 36.

## Claims

1. A method of forming layers (2) of cigarettes (3), each layer (2) comprising a given number (N) of cigarettes (3) arranged side by side; characterized by comprising the steps of gravity feeding at least two adjacent cigarettes (3a, 3b) of a said layer (2) to a respective inflow seat (28) located at an open end (8) of a hopper (6) containing cigarettes (3); extracting said two cigarettes (3a, 3b) from the respective inflow seat (28) by means of a single extracting means (31) housed inside the inflow seat (28); continuously feeding a conveyor (10) along a given path (P2) extending past said open end (8); and feeding said two cigarettes (3a, 3b) to the conveyor (10) by means of said extracting means (31) to form a portion of said layer (2).

2. A method as claimed in Claim 1, characterized in that said hopper (6) comprises a number of supply channels (25) for respective columns (26) of cigarettes (3); each supply channel (25) having a respective output opening (27) for the cigarettes (3) in the respective column (26); and said two cigarettes (3a, 3b) being fed along two channels (25a, 25b) of said supply channels (25), the respective output openings (27) of which two channels are arranged side by side over the same inflow seat (28).

3. A method as claimed in Claim 2, characterized in that said two channels (25a, 25b) are arranged side by side and parallel to each other.

4. A method as claimed in Claim 3, characterized in that said two channels (25a, 25b) are vertical supply channels (25).

5. A method as claimed in Claim 2, 3 or 4, characterized in that the output openings (27) of said supply channels (25) are arranged in series along an arc parallel to said path (P2); said path (P2) extending about a first axis (11) of rotation of said conveyor (10).

6. A method as claimed in any one of the foregoing Claims from 2 to 5, characterized in that said extracting means (31) defines, with the respective inflow seat (28), a curved withdrawal channel (35) extending along the output openings (27) of the respective supply channels (25), and comprises an extracting element (37) movable along the withdrawal channel (35) to extract said two cigarettes (3a, 3b) from the inflow seat (28) and subsequently feed the two cigarettes (3a, 3b) to said conveyor (10).

7. A method as claimed in Claim 6, characterized in that said extracting means (31) comprises a substantially cylindrical support (31) for said extracting element (37); said support (31) being mounted for rotation inside the respective inflow seat (28) so as to rotate continuously about a respective second axis (33) of rotation parallel to said first axis (11).

8. A method as claimed in Claim 7, characterized by comprising the further step of of retaining said two cigarettes (3a, 3b) substantially at the respective output openings (27) by means of said extracting element (37) and the respective support (31).

9. A method as claimed in Claim 8, characterized by comprising the further step of compacting said two cigarettes (3a, 3b) by means of compacting means (47) located at the output opening (27) of at least one of said two channels (25a, 25b); the compacting means (47) being located releasably inside the respective withdrawal channel (35), and cooperating with the respective said extracting element (37) as the extracting element (37) travels along the withdrawal channel (35).

10. A method as claimed in Claim 8 or 9, characterized by comprising the further step of arresting the fall of at least one (3a) of said two cigarettes (3a, 3b) of each layer (2) by means of stop means (44) during extraction of the two cigarettes (3a, 3b) of the previous layer (2); said stop means (44) being located releasably substantially at the respective output opening (27).
